# EUROPEAN PATENT APPLICATION

(11) **EP 2 713 015 A2**
(43) Date of publication of application: **02.04.2014**
(21) Application number: 13179683.1
(22) Date of filing: 08.08.2013
(51) Int. Cl.: F01D 17/08, F02C 9/00

(54) **Turbomachine including a pressure sensing system**

(30) Priority: 27.09.2012 US 201213628877
(71) Applicant: Hamilton Sundstrand Corporation, Windsor Locks, CT 06096-1010 (US)
(72) Inventor: Rhoden, William E., Glastonbury, CT Connecticut 06033 (US)
(74) Representative: Hull, James Edward

(57) **Abstract**

A turbomachine (2) includes a fan (22) having a housing (23) and a plurality of vanes (42) rotatable within the housing (23). Each of the plurality of vanes (42) includes a pressure side (110) and a suction side (112). A pressure sensing system (100) includes at least one pressure sensor (120) mounted to one of the pressure side (110) and the suction side (112) of one or more of the plurality of vanes (42), and a pressure sensor receiver (160) mounted to the housing (23). The at least one pressure sensor (120, 122) is configured and disposed to communicate pressure data to the pressure sensor receiver (160).

## Description

### BACKGROUND OF THE INVENTION

Exemplary embodiments pertain to the art of turbomachines and, more particularly, to a turbomachine including a pressure sensing system.

Turbomachines generally include a compressor section mechanically linked to a turbine section. The compressor section is also fluidically connected to the turbine section through a combustor section. Air is compressed by the compressor and passed to the combustor section. In the combustor section the air is mixed with a fuel to form a combustible mixture. The combustible mixture is ignited to form hot gases that are delivered to the turbine portion. The hot gases act upon vanes arranged in stages that extend along the turbine portion. The hot gases act upon the vanes converting thermal energy to a mechanical output.

### BRIEF DESCRIPTION OF THE INVENTION

Disclosed is a turbomachine including a fan having a housing and a plurality of vanes rotatable within the housing. Each of the plurality of vanes includes a pressure side and a suction side. A pressure sensing system includes at least one pressure sensor mounted to one of the pressure side and the suction side of one or more of the plurality of vanes, and a pressure sensor receiver mounted to the housing. The at least one pressure sensor is configured and disposed to communicate pressure data to the pressure sensor receiver.

Also disclosed is a pressure sensing system including a pressure sensor mounted to a rotary component, and a pressure sensor receiver mounted to a stationary component in proximity to the pressure sensor. The pressure sensor is configured and disposed to communicate pressure data to the pressure sensor receiver.

Further disclosed is a method of determining pressure in a turbomachine. The method includes sensing pressure at a pressure sensor provided on a vane surface in the turbomachine, and passing pressure data from the pressure sensor to a pressure sensor receiver mounted to a housing of the turbomachine.

### BRIEF DESCRIPTION OF THE DRAWINGS

The following descriptions should not be considered limiting in any way. With reference to the accompanying drawings, like elements are numbered alike:
FIG. 1 is a partial cross-sectional view of a turbomachine including a pressure sensing system in accordance with an exemplary embodiment;
FIG. 2 is a partial perspective view of a fan vane of the turbomachine of FIG. 1 including pressure sensors in accordance with an exemplary embodiment; and

FIG. 3 is a block diagram illustrating a method of sensing pressure in a turbomachine in accordance with an exemplary embodiment.

### DETAILED DESCRIPTION OF THE INVENTION

A detailed description of one or more embodiments of the disclosed apparatus and method are presented herein by way of exemplification and not limitation with reference to the Figures.

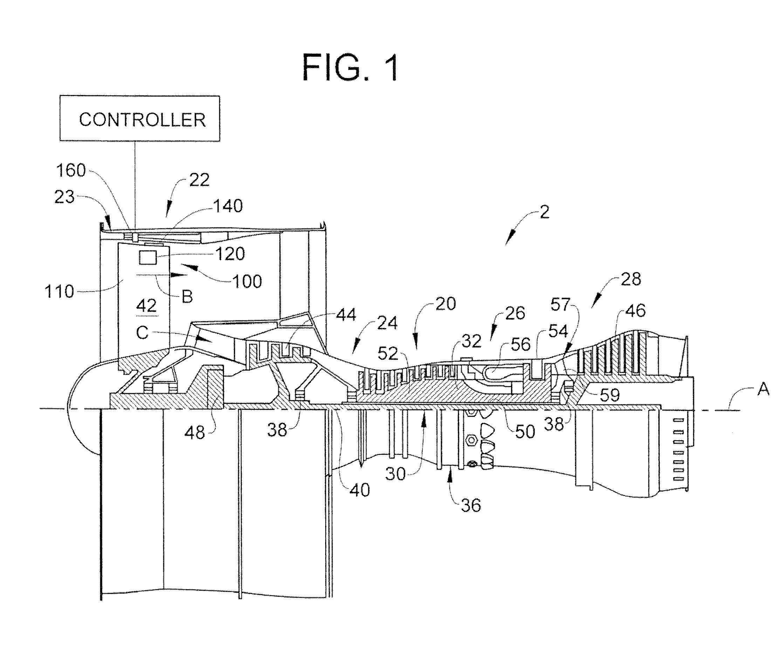

A turbomachine in accordance with an exemplary embodiment is illustrated generally at 2 in FIG. 1. Turbomachine 2 takes the form of a two-spool turbofan 20 having a fan section 22, a compressor section 24, a combustor section 26 and a turbine section 28. Fan section 22 includes a housing 23 and drives air along a bypass flowpath B while compressor section 24 drives air along a core flowpath C for compression and communication into combustor section 26. Although depicted as a turbofan, turbomachine 2 may take on a variety of forms. It should also be understood that the concepts described herein are not limited to use with turbofans as the teachings may be applied to other types of turbine engines including three-spool architectures.

Turbofan 20 is shown to include a low speed spool 30 and a high speed spool 32 mounted for rotation about an engine's central longitudinal axis A relative to an engine's static structure 36 via several bearing systems 38. It should be understood that various bearing systems 38 at various locations may alternatively or additionally be provided. Low speed spool 30 generally includes an inner shaft 40 that interconnects a plurality of vanes 42 arranged within housing 23 of fan section 22, a low-pressure compressor 44 and a low-pressure turbine 46. The inner shaft 40 is connected to a plurality of vanes 42 through a geared architecture 48. Geared architecture 48 drives the plurality of vanes 42 at a lower speed than the low speed spool 30. High-speed spool 32 includes an outer shaft 50 that interconnects a high-pressure compressor 52 and high-pressure turbine 54. A combustor 56 is arranged between the high-pressure compressor 52 and the high-pressure turbine 54.

A mid-turbine frame 57 of the engine's static structure 36 is arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine's central longitudinal axis A which is co-linear with their longitudinal axes. The core airflow is compressed by the low-pressure compressor 44 then the high-pressure compressor 52, mixed and burned with fuel in the combustor 56, then expanded over the high-pressure turbine 54 and low-pressure turbine 46. The mid-turbine frame 57 includes airfoils 59 which are in the core airflow path C. The turbines 46, 54 rotationally drive the respective low speed spool 30 and high-speed spool 32 in response to the expansion.

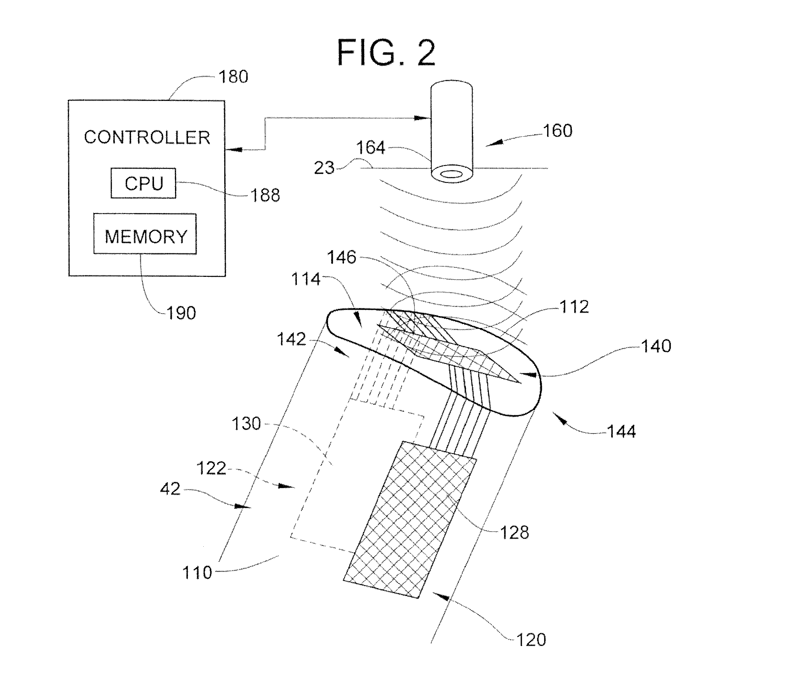

In accordance with an exemplary embodiment, turbofan 20 includes a pressure sensing system 100 provided in fan section 22. Each of the plurality of vanes 42 include a pressure side 110, a suction side 112 and a tip portion 114 as shown in FIG. 2. Pressure sensing system 100 includes a first pressure sensor 120 provided on pressure side 110 and a second pressure sensor 122 (shown in phantom) provided on suction side 112. First pressure sensor 120 takes the form of a thin film pressure sensor array 128. Similarly, second pressure sensor 122 takes the form of a thin film pressure sensor array 130. Of course it should be understood that the particular form of first and second pressure sensors 120 and 122 may vary. First sensor 120 is operatively connected to a pressure sensor transmitter 140 provided on tip portion 114 through a first plurality of sense lines 142. Second sensor 122 is operatively connected to the pressure sensor transmitter 140 through a second plurality of sense lines 144. First and second pressure sensors 120 and 122 detect pressures on pressure side 110 and suction side 112 of vane 42. First and second pressure sensors 120 and 122 pass respective first and second pressure data to pressure sensor transmitter 140. Pressure sensor transmitter 140 is shown in the form of a radio frequency identification (RFID) tag 146 mounted near a trailing edge (not separately labeled) of vane 42 on tip portion 114.

In further accordance with the exemplary embodiment, pressure sensing system 100 includes a pressure sensor receiver 160 mounted to housing 23. Pressure sensor receiver 160 is shown in the form of a radio frequency (RF) receiver 164 that is configured to communicate wirelessly with pressure sensor transmitter 140. Pressure sensor receiver 160 is coupled to a controller 180 including a central processing unit (CPU) 188 and a memory 190. As will be detailed more fully below, controller 180 receives pressure data from first and second pressure sensors 120 and 122 and calculates a pressure ratio across vane 42. Controller 180 may communicate the pressure ratio to an engine controller (not shown) that may adjust operational parameters of turbofan 20. Alternatively, controller 180 may directly control operational parameters of turbofan 20 based on a calculated pressure ratio.

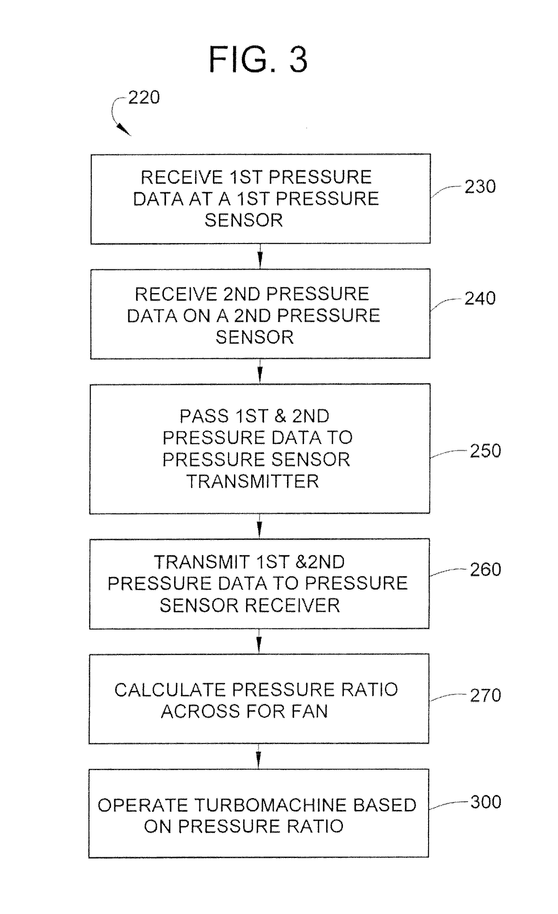

Reference will now follow to FIG. 3 in describing a method 220 of sensing vane pressure in accordance with an exemplary embodiment. As shown, first pressure data is received at first pressure sensor 120 as indicated in block 230. Second pressure data is received from second pressure sensor 122 as indicated in block 240. The first and second pressure data are transmitted to pressure sensor transmitter 140 as indicated in block 250. Pressure sensor transmitter 140 wirelessly communicates the first pressure data and the second pressure data to pressure sensor receiver 160 mounted to housing 23 as indicated in block 260. Pressure sensor receiver 160 passes the first pressure data and the second pressure data to controller 180 which calculates a pressure ratio across vane 42 as indicated in block 270. The pressure ratio may then be employed to control turbofan 20 as indicated in block 300.

At this point it should be understood that the exemplary embodiments provide a system for calculating pressure on a rotary component, and transmitting pressure data wirelessly to a stationary receiver. The pressure data is described as being communicated between an RFID tag and an RF receiver. However, it should be understood that other forms of wireless communication may also be employed. The RFID tag may be a passive element, receiving transmitted energy from the RF receiver, or the RFID tag may harvest energy from other components. For example, the RFID tag may be powered by thermal energy, through perceived vibrations or other environmental factors. Further, while described as transmitting data, the pressure sensor transmitter should also be understood to passively communicate pressure data to the pressure sensor receiver. Also, while described as being employed in a fan section of a turbofan engine, the pressure sensing system in accordance with the exemplary embodiments may be employed in a variety of systems when measuring pressure on a rotating or moveable component is desired.

While the invention has been described with reference to an exemplary embodiment or embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the claims.

## Claims

1. A turbomachine (2) comprising:
a fan (22) including a housing (23) and a plurality of vanes (42) rotatable within the housing (23), each of the plurality of vanes (42) including a pressure side (100) and a suction side (112); and
a pressure sensing system (100) including at least one pressure sensor (120, 122) mounted to one of the pressure side (110) and the suction side (112) of one or more of the plurality of vanes (42) and a pressure sensor receiver (160) mounted to the housing (23), the at least one pressure sensor (120, 122) being configured and disposed to communicate pressure data to the pressure sensor receiver (160).

2. A pressure sensing system (100) comprising:
a pressure sensor (120, 122) mounted to a rotary component (42); and
a pressure sensor receiver (160) mounted to a stationary component (23) in proximity to the pressure sensor (120, 122), the pressure sensor (120, 122) being configured and disposed to communicate pressure data to the pressure sensor receiver (160).

3. The turbomachine (2) or pressure sensing system (100) according to claim 1 or 2, further comprising a pressure sensor transmitter (140) mounted to the one or more of the plurality of vanes (42) or to the rotary component (42) and operatively connected to the pressure sensor (120, 122), the pressure sensor transmitter (140) being configured and disposed to communicate with the pressure sensor receiver (160).

4. The turbomachine (2) according to claim 3, wherein the pressure sensor transmitter (140) is mounted to a tip portion (114) of the one or more of the plurality of vanes (42).

5. The turbomachine (2) or pressure sensing system (100) according to claim 3 or 4, wherein the pressure sensor transmitter (140) comprises a radio frequency identification (RFID) tag (146).

6. The turbomachine (2) or pressure sensing system (100) according to any preceding claim,wherein the pressure sensor receiver (160) comprises a radio frequency (RF) receiver.

7. The turbomachine (2) or pressure sensing system (100) according to any preceding claim, wherein the at least one or said pressure sensor (120, 122) includes a first pressure sensor (120) mounted to the pressure side (110) of the one or more of the plurality of vanes (42) or to one side of the rotary component (42) and a second pressure sensor (122) mounted to the suction side (112) of the one or more of the plurality of vanes (42) or to another side of the rotary component (42).

8. The turbomachine (2) or pressure sensing system (100) according to claim 7, further comprising a controller operatively connected to the pressure sensor receiver (160), the controller being configured and disposed to determine a pressure ratio across the one of the one or more of the plurality of vanes (42) or across the rotary component (42) based on pressure data received from the first and second pressure sensors (120, 122).

9. The pressure sensing system (100) according to any of claims 2, 3 or 5 to 8, wherein the pressure sensor (120, 122) is mounted to an external surface of a turbomachine vane (42).

10. The turbomachine (2) or pressure sensing system (100) according to any preceding claim, wherein the at least one or said pressure sensor (120, 122) comprises a thin film pressure sensor array.

11. A method of determining pressure in a turbomachine (2), the method comprising:
sensing pressure at a pressure sensor (120, 122) provided on a vane surface in the turbomachine (2); and
passing pressure data from the pressure sensor (120, 122) to a pressure sensor receiver (160) mounted to a housing (23) of the turbomachine (2).

12. The method of claim 11, wherein passing pressure data from the pressure sensor (120, 122) to the pressure sensor receiver (160) includes reading a radio frequency identification (RFID) tag (146) coupled to the vane (43) and operatively connected to the pressure sensor (120, 122).

13. The method of claim 11 or 12, wherein sensing pressure at the pressure sensor (120, 122) includes sensing a first pressure at a first pressure sensor (120) mounted to a pressure side (110) of the vane (42) and sensing a second pressure at a second pressure sensor (122) mounted to a suction side (112) of the vane (42).

14. The method of any of claims 11 to 13, further comprising determining a pressure ratio across the pressure side (110) and the suction side (112) of the vane (42).
